# EUROPEAN PATENT APPLICATION

(11) **EP 1 925 906 A1**
(43) Date of publication of application: **28.05.2008**
(21) Application number: 07022676.6
(22) Date of filing: 22.11.2007
(51) Int. Cl.: G01B 11/24, G01B 11/30

(54) **Detection Method**

(30) Priority: 24.11.2006 IT MO20060391
(71) Applicant: Santi, Gabriele, 41045 Montefiorino (MO) (IT)
(72) Inventor: Santi, Gabriele, 41045 Montefiorino (MO) (IT)
(74) Representative: Feltrinelli, Secondo Andrea

(57) **Abstract**

The detection method for detecting the position of products (1; 10) having at least one surface (2, 3; 11, 12) with roughness (4) comprises arranging said products (1; 10) with respect to a reference plane (P2; P3); obliquely lighting said roughness (4) using lighting means (6; 15, 16) according to at least one direction (D1; D2) oblique to said surface in such a way as to create on these shadows (8; 17) of said roughness (4); detecting said shadows (8; 17) on a detection plane (P1; P4) using detection means (5), obtaining detected shadows (8; 17); deducing a position of said detected shadows (8; 17) with respect to said reference plane (P2; P3) and/or said detection plane (P1; P4).

## Description

### TECHNICAL FIELD

The invention refers to a detection method, suitable for detecting the position of products, and specifically of ceramic products, with respect to a reference surface.

### PRIOR ART

In the ceramic industry, but not only, the production cycles are all substantially automatic.

The products that are made in the ceramic industry, more specifically the tiles, have, whatever their dimensions, a visible face, an opposite installation face and lateral sides.

In order to handle the manufactured tiles automatically, for example to be able to place them into a packaging box or to create a planned design, it is necessary to determine their position, for example, with respect to a support and conveyor surface, in order to know whether these tiles rest on this surface with the visible face, or with the installation face or again, if they are placed on their side, which of the faces is turned towards a prearranged reference plane.

When the position of the tiles is known, special machinery arranges them in this position while other machinery corrects the position of those tiles that are positioned differently to the majority of those placed on the support surface.

In point of fact, it can occur, for example, that on a conveyor surface of a conveyor unit, a large number of tiles is placed all with the installation face in contact with the conveyor surface, while some tiles are accidentally overturned with the installation face turned upwards and the visible face placed in contact with the conveyor surface.

Along the conveyor unit, overturning devices are therefore arranged that overturn the tiles that are not positioned in the desired position.

To select these tiles from among the others, a number of devices are known.

A first device comprises a conveyor unit that has a vibrating conveyor surface made up of a belt and which is kept tilted with respect to the horizon.

The belt has a containment rib, slightly in relief and which is normally obtained longitudinally close to the side of the conveyor which is lower down in the tilted position of the latter.

The tiles are furthermore specially made with rounded edges on one of the faces, normally the visible face.

When the tiles are placed on the tilted belt of the conveyor unit, one side of the tiles rests constantly against the containment rib.

If some tiles have the face with rounded edges turned towards the conveyor surface, while most of the other tiles are turned in the opposite direction, meaning with the face with corner edges resting on the conveyor surface, the vibration of the latter during forward movement and the inclination cause the rounded edges to gradually climb over the retention rib with the consequent falling of the tile into a substantially semi-circular chute of a collector element placed sideways along the lower side of the conveyor surface.

The tile falling into this chute, in slipping, overturns and is deposited positioned like the others on a second substantially horizontal conveyor surface located at a lower height than the lowest edge of the previous conveyor unit with the tilted surface.

Consequently, tiles that are all positioned in a desired position reach the respective exit fronts of the conveyor units.

Another method for arranging tiles, or more precisely, mosaic tesserae, in a desired position, requires the tiles to be aligned in rows and placed on their side on a support surface on which they are retained by means of containment elements that rise from the support surface and which define a corridor into which the tesserae are conveyed.

Because the latter have a substantially asymmetric cross section with respect to a plane parallel with the larger faces, installation and visible respectively, section which is T-shaped, the tesserae have two portions with respect to said plane that differ in weight; for this reason, when the containment elements are removed, the mosaic tesserae all overturn onto the part of the heaviest face and are collected up by a conveyor unit underneath all positioned with the heaviest face in contact with the conveyor surface of the conveyor unit.

This state of the art has a number of drawbacks.

A first drawback is that to be certain the tiles are all positioned in a desired position, the production systems must all be equipped with special apparatus to correct the position of those tiles that arrange accidentally in a way contrary to the desired position.

Another drawback is that the tiles have to necessarily be made with special rounded edges to allow sorting those that are accidentally positioned in positions different to the desired position and to allow the use of automatic overturning devices to again arrange them in the desired position.

Another drawback is that the corrections in the position of the tiles are made using essentially mechanical devices that require contact and scraping with the faces or the sides of the tiles which can become damaged.

### OBJECTS OF THE INVENTION.

An object of the invention is to improve the state of the art.

Another object of the invention is to develop a detection method that permits detecting the position of products with respect to a reference plane, in a simple and safe way.

Another object of the invention is to conceive a detection method that does not require the presence of particular adaptations in the structures of the products whose position has to be detected.

Another object of the invention is to conceive a detection method that permits detecting the position of products without any danger of damaging these.

According to one aspect of the invention, a detection method is provided for detecting the position of products having at least one surface with roughness comprising arranging said products with respect to a reference plane, characterized in that it comprises: obliquely lighting said roughness using lighting means according to at least one direction oblique to said surface in such a way as to create on this shadows of said roughness; detecting said shadows on a detection plane using detection means, obtaining detected shadows; deducing a position of said detected shadows with respect to said reference plane and/or said detection plane.

According to another aspect of the invention, a detection method is provided for detecting the position of products having at least one surface with roughness comprising arranging products with respect to a reference plane, characterized in that it comprises: obliquely lighting said roughness using lighting means according to at least two directions oblique to said surface in such a way as to create on these shadows of said roughness; detecting said shadows on a detection plane using detection means, obtaining detected shadows; deducing a position of said detected shadows with respect to said reference plane and/or said detection plane.

The detection method thus permits detecting the position of a product, such as for example of a flat ceramic covering product, and establishing whether this has an installation face or a visible face turned towards a pre-established reference plane.

### BRIEF DESCRIPTION OF THE DRAWINGS

Further characteristics and advantages of the invention will appear more evident from the description of a detection method, illustrated indicatively by way of non limiting example, in the accompanying drawings, wherein:
Figure 1 is a very schematic view of a detection phase of the position of an installation face of a ceramic tile with respect to a reference plane, according to a first embodiment of a detection method;
Figure 2 is a very schematic and interrupted view of a detection phase of a shaped side of a ceramic tile so as to determine the position of a face of this with respect to a reference plane, according to a second embodiment of a detection method.

### PREFERRED EMBODIMENTS.

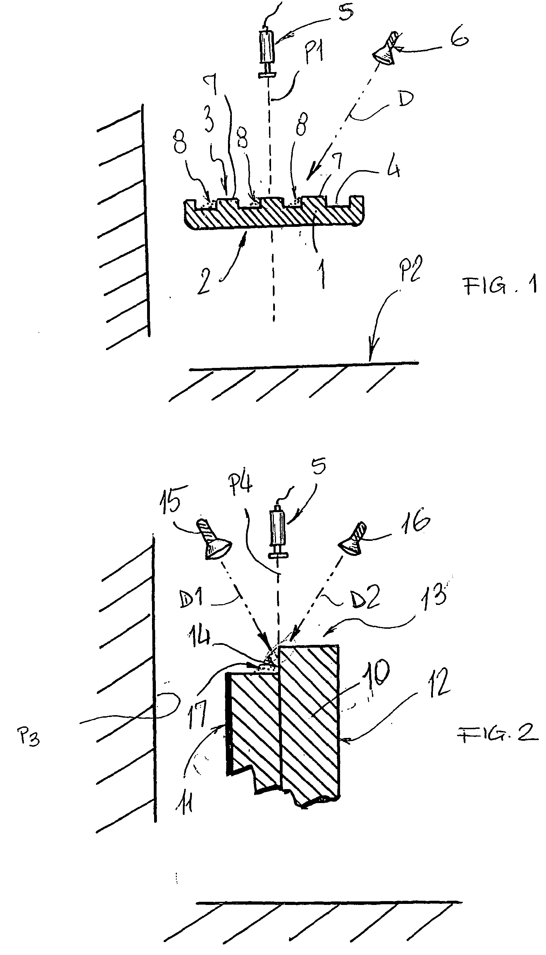

In detail and with reference to the Figure 1, by 1 is indicated a ceramic product, for example a ceramic tile which, in a known way, has two parallel and opposite faces, more specifically a visible face 2 and an installation face 3.

As can be seen in Figure 1, the installation face 3 is covered by a series of grooves 4 usually provided to favour the grip of adhesive materials, while the visible face 2 is substantially smooth.

When the position of the ceramic tile 1 has to be detected, meaning whether this is arranged straight or overturned with respect to a reference plane "P2", it is placed underneath a detection device 5, such as, for example, a camera or a light-sensitive detection device, which has its own detection plane "P1"; then, the installation face 3 is lit up with a lighting apparatus 6, such as, for example, a spotlight or a stroboscope lamp.

The direction of lighting, indicated by "D" in the Figure 1, is oblique so that shadows are generated by the reliefs 7 defined between the grooves 4 and which are projected inside these or, in any case, on the installation face 3; these shadows are schematically indicated by the number 8.

The detection device 5 consequently detects the presence of these shadows 8 and this way it can be established whether the ceramic tile 1 is arranged with the installation face turned towards the detection device 5 and the opposite visible face towards the reference plane "P2".

If, on the contrary, the ceramic tile 1 were arranged with the visible face 2 turned towards the detection device 5, lighting this up with the lighting apparatus 6, no shadows would be generated because the visible face 2 is substantially smooth.

Consequently, the non-formation of shadows 8 establishes that the ceramic tile 1 is positioned with the visible face 2 turned towards the detection device 5 while the opposite installation face 3 is turned towards the reference plane "P2".

In some cases, the possibility exists of the visible face 2 also being rough and that, when it is lit up, shadows are also generated on it that are in any case of shape, dimensions, quantity and surface distribution substantially different compared to those generated by the grooves 4, or by any reliefs 7 or feet extending from the installation face 3: in this case the detection device 5 can be arranged in such a way as to detect, for example, one or more of these differences between the shadows generated on a face or on the opposite face, detecting them either individually or both together, and consequently establishing the position of the tile 1 with respect to the reference plane "P2".

With reference to the Figure 2, it will be noticed that a ceramic product 10, illustrated for the sake of simplicity only in part, is placed on the side underneath the detection device 5 since both the visible face 11 and the opposite installation face 12 are both substantially without roughness, while a side 13 of this ceramic product 10 shows a step 14.

To establish the position of the ceramic product 10 with respect to an indicated reference plane, in this case with "P3", the ceramic product 10 is arranged with the step aligned with a detection plane, indicated in this case by "P4", of the detection device 5.

Subsequently, the side 13 is lit up alternatively by two lighting apparatus, indicated by 15 and 16 respectively, which are arranged substantially symmetrically and bilaterally with respect to the detection plane "P4".

The lighting apparatus 15 and 16 preferably comprise two stroboscopic lamps, able to emit light flashes in very quick succession and positioned in two lighting directions indicated by "D1" and "D2", which are convergent.

When a flash of light is emitted by the lighting apparatus 15 on the left side of the detection plane "P4" for the observer of the Figure, the detection device does not detect the creation of shadows, while, on the contrary, when a flash of light is emitted by the lighting apparatus 16 placed on the right side of the detection plane "P4" for the observer, a shadow 17 is generated that extends towards the reference plane "P3" with respect to the detection plane "P4": this way the position of the ceramic tile 10 is detected, which in this case has the visible face 11 turned towards the reference plane "P3" and the opposite installation face 12 turned outwards, with respect to the detection plane "P4".

In the event of the ceramic tile 10 being positioned in the opposite way to that shown in Figure 2, the detection device 5 would reveal a shadow 17 extending towards the right part of the detection plane "P4" with respect to the observer: in this case, the detection method would determine the position of the tile 10 with the installation face 12 turned towards the reference plane "P3" and the visible face 11 turned the opposite way with respect to the detection plane "P4".

In both embodiments of the detection method, the position of the ceramic tiles 1, or 10, is reliably determined and this allows, if necessary, arranging overturning devices along a production line to selectively straighten any tiles detected to be overturned.

## Claims

1. Detection method for detecting the position of products (1; 10) having at least one surface (2, 3; 11, 12) with roughness (4) comprising arranging said products (1; 10) with respect to a reference plane (P2; P3), **characterized in that** it comprises: obliquely lighting said roughness (4) using lighting means (6) according to at least one direction oblique to said surface (2, 3; 11, 12) in such a way as to create on this shadows (8) of said roughness (4); detecting said shadows (8) using detection means (5), obtaining detected shadows (8); deducing a position of said detected shadows (8) with respect to said reference plane (P2; P3).

2. Method according to claim 1, wherein said surface comprises an installation face (3; 12) of said products (1; 10).

3. Method according to claim 1, wherein said surface comprises a visible face (2; 11) of said products (1; 10).

4. Method according to claim 1, wherein said surface comprises a side face (13) of said products (1; 10).

5. Method according to claim 1, wherein said reference plane (P2; P3) is substantially perpendicular to said surface (2, 3; 11, 12).

6. Method according to claim 1, wherein said reference plane (P2; P3) is substantially parallel with said surface (2,3; 11, 12).

7. Detection method for detecting the position of products (1; 10) having at least one surface (2, 3; 11, 12) with roughness (4) comprising arranging said products (1; 10) with respect to a reference plane (P2; P3), **characterized in that** it comprises: obliquely lighting said roughness (4) using lighting means (6; 15, 16) according to at least two directions (D1, D2) oblique to said surface (2, 3; 11, 12) in such a way as to create on these positioned shadows (8; 17) of said roughness (4); detecting said positioned shadows (8; 17) on a detection plane (P4) using detection means (5), obtaining detected shadows (8; 17); deducing a position of said positioned detected shadows (8; 17) with respect to said reference plane (P2; P3).

8. Method according to claim 7, wherein said detection plane (P2; P3) is placed substantially aligned to at least one of said roughness (4).

9. Method according to claim 7, wherein said obliquely lighting comprises alternatively lighting said roughness (4) according to said at least two oblique directions (D1, D2).

10. Method according to claim 7 or 8, wherein said at least two oblique directions comprise two symmetrical directions (D1, D2) with respect to said detection plane (P1;P4).

11. Method according to claim 10, wherein said at least two symmetrical directions comprise two converging directions (D1, D2) towards said at least one surface (2, 3; 11, 12).

12. Method according to claim 7, wherein said at least one surface comprises a side face (13) of said products (1; 10).

13. Method according to claim 7, wherein said at least one surface comprises an installation face (3; 12) of said products (1; 10).

14. Method according to claim 7, wherein said at least one surface comprises a visible face (2; 11) of said products (1; 10).

15. Method according to claim 7, wherein said detection plane (P1; P4) and said reference plane (P2; P3) are substantially parallel with each other.

16. Method according to claim 7, wherein said positioned shadows comprise shadows (8; 17) positioned towards said reference plane (P2; P3).

17. Method according to claim 7, wherein said positioned shadows comprise shadows (8; 17) positioned the opposite way to said reference plane (P2; P3).

18. Apparatus for detecting the position of products (1; 10) having at least one rough surface (2, 3; 11, 12), **characterized in that** it comprises: a reference plane (P2; P3) for positioned products (1; 10) to detect; lighting means (6; 15, 16) of roughness (4) according to at least one lighting oblique direction (D1; D2) in such a way to create shadows (8; 17) of said roughness (4); detection means (5) of said shadows (8; 17) according to a detection plane (P1; P4).
